# EUROPEAN PATENT APPLICATION

(11) **EP 4 415 126 A1**
(43) Date of publication of application: **14.08.2024**
(21) Application number: 22919503.7
(22) Date of filing: 14.01.2022
(51) Int. Cl.: H01M 50/148

(54) **BATTERY, ELECTRONIC DEVICE, AND PREPARATION METHOD AND PREPARATION APPARATUS FOR BATTERY**

(71) Applicant: Contemporary Amperex Technology Co., Limited, Ningde City, Fujian 352100 (CN)
(72) Inventor: WU, Yizhen, Ningde City, Fujian 352100 (CN); YANG, Jianxiong, Ningde City, Fujian 352100 (CN); LI, Yanpeng, Ningde City, Fujian 352100 (CN); ZOU, Qifan, Ningde City, Fujian 352100 (CN); XU, Xiao, Ningde City, Fujian 352100 (CN)
(74) Representative: Ziebig Hengelhaupt Intellectual Property Attorneys Patentanwaltskanzlei PartGmbB
(86) International application number: PCT/CN2022/072163
(87) International publication number: WO 2023/133855

(57) **Abstract**

The present application relates to a battery, an electrical equipment, and a preparation method and a preparation device for the battery. The battery includes multiple battery cells, each battery cell includes a shell, an electrode terminal, and an insulation layer, the shell includes a first wall, the first wall includes a body and a first convex part, the body has an inner surface and an outer surface arranged oppositely to each other in the thickness direction thereof, the first convex part protrudes from the outer surface in a direction away from the inner part of the battery cells, the electrode terminal is arranged on the body, and the insulation layer covers and is fixed on the first convex part; and a box, the box is provided with an accommodating cavity with an opening, the multiple battery cells are accommodated in the accommodating cavity, and the insulation layer is configured for bonding with the cover piece covering the opening to fixedly connect the multiple battery cells to the cover piece. The battery provided in the present application has a higher energy density and a better safety.

## Description

### Technical Field

The present application relates to the field of battery technology, specifically to a battery, an electrical equipment, and a preparation method and a preparation device for the battery.

### Background Art

In the pursuit of energy conservation and emission reduction, batteries are widely used in electrical equipment, such as electric vehicles. With the continuous development of technology, the electrical equipment is required to be miniaturized and have better safety. Therefore, higher requirements are put forward for the energy density and safety of batteries.

### Summary

The present application aims at providing a battery, an electrical equipment, and a preparation method and a preparation device for the battery, so as to improve the energy density and safety of batteries.

The embodiment of the present application is achieved as follows.

In the first aspect, the embodiment of the present application provides a battery, which includes: multiple battery cells, wherein each battery cell includes a shell, an electrode terminal, and an insulation layer, wherein the shell includes a first wall, wherein the first wall includes a body and a first convex part, wherein the body has an inner surface and an outer surface arranged oppositely to each other in the thickness direction thereof, and the first convex part protrudes from the outer surface in a direction away from the inner part of the battery cells, wherein the electrode terminal is arranged on the body, and the insulation layer covers and is fixed on the first convex part; and a box, wherein the box is provided with an accommodating cavity with an opening, and the multiple battery cells are accommodated in the accommodating cavity, wherein the insulation layer is configured for bonding with the cover piece covering the opening to fixedly connect the multiple battery cells to the cover piece.

In the technical solution of the present application, by setting a first convex part that is higher than the body of the first wall on the first wall of the shell, and setting an insulation layer on the first convex part, the battery cell is directly bonded to the cover piece through the insulation layer on the first convex part, which can reduce or avoid the use of structural components such as box beams, and improve energy density, and also can insulate and isolate the shell of the battery cell from the cover piece, and keep the body away from the cover piece, such that the electrode terminal provided on the body is not easily accessible to the cover piece, thus preventing the cover piece from being electrified and avoiding the risk of battery leakage and short circuit, thereby taking into account the energy density and safety of the battery simultaneously.

In an embodiment of the present application, in the thickness direction of the body, the height of the insulation layer protruding from the outer surface is greater than the height of the electrode terminal protruding from the outer surface.

In the above technical solution, due to the height of the insulation layer exceeding the height of the electrode terminal, when the insulation layer is connected to the cover piece, it is ensured that the electrode terminal does not contact the cover piece, so as to further avoid electric leakage and short circuit, and improve the safety of the battery.

In an embodiment of the present application, after the box is mounted on the vehicle, the cover piece is located above the box.

In the above technical solution, with the cooperation of the cover piece and the box, the stability of the battery cell in the box is effectively improved, and the integrity of the battery is improved. Moreover, the gravity of the battery acts on the cover piece, and the cover piece serves as the main load-bearing structure, thereby improving the overall structural strength of the battery.

In an embodiment of the present application, the cover piece is the floor of the vehicle.

In the above technical solution, the floor of the vehicle has higher strength and stiffness. Multiple battery cells are fixed on the floor of the vehicle, which can improve the overall stiffness and structural strength of the battery and enable the battery to be well integrated with the vehicle. Moreover, the battery cell is fixed on the floor of the vehicle, which can further avoid or reduce the use of box beams, thereby simplifying the structure of the battery, and improving the volume energy density of the battery.

In an embodiment of the present application, the first convex part is made of the same material as the body.

In the above technical solution, the body is a part of the shell and can be made of relatively high strength metal materials. By setting the material of the first convex part to be the same as the body, the strength of the first convex part is higher and not easy to deform. Due to the connection between the battery cell and the cover piece through the insulation layer on the first convex part, when the strength of the first convex part is higher, the connection between the battery and the cover piece can be more stable and reliable. On the other hand, by making the first convex part and the body made of the same material, the first convex part and the body are easy to be welded or integrally molded.

In an embodiment of the present application, the first convex part and the body are integrally molded.

In the above technical solution, the first convex part and the body are integrally molded, with good integrity and high structural strength, thereby ensuring stable and reliable connection between the battery and the cover piece.

In an embodiment of the present application, a concave part is formed at a position on the body corresponding to the first convex part, and the concave part is concave from the inner surface towards a direction away from the inside of the battery cell.

In the above technical solution, by forming a concave part on the back of the convex part, the material consumption of the shell can be reduced, costs can be saved, the internal space of the battery cell can be increased, the capacity of the battery cell can be increased, and the energy density can be improved.

In an embodiment of the present application, each battery cell further includes an insulating member and an electrode assembly, wherein the electrode assembly is arranged within the shell, the insulating member is arranged between the first wall and the electrode assembly, and one side of the insulating member facing the first wall is provided with a second convex part, wherein the second convex part is accommodated within the concave part to support the first convex part.

In the above technical solution, by making the second convex part of the insulating member cooperate with the concave part of the first wall, it plays a limiting role to ensure that the insulating member does not move, and to ensure that the insulating member isolates the electrode assembly and the first wall, so as to prevent the first wall from contacting the electrode assembly to have electricity, reduce the risk of electric leakage and short circuit, and improve the safety of the battery. On the other hand, when the second convex part is located in the concave part, it is located on the back of the first convex part, thereby playing a role in supporting the first convex part, avoiding deformation of the first convex part, and further improving the connection stability between the battery and the cover piece.

In an embodiment of the present application, the first convex part is separated from the body, and the first convex part is welded to the body.

In the above technical solution, compared to the integrated molding of the first convex part and the body, the method of separately arranging the first convex part and the body is convenient for adjusting the height of the first convex part protruding from the body according to actual needs, thereby improving the applicability of the battery. On the other hand, the separately arranging method also has the function of facilitating the processing and modification of existing batteries, so as to improve the energy density and safety of existing batteries and meet usage needs.

In an embodiment of the present application, the first convex part includes a top wall and a side wall, wherein the top wall is arranged oppositely to the body, the side wall surrounds the top wall, one end of the side wall is connected to the top wall, the other end of the side wall extends towards the body, the top wall, the side wall, and the body jointly define a cavity, and the insulation layer covers the top wall.

In the above technical solution, the first convex part is a hollow and convex structure formed on the body, which not only achieves the body to be far away from the cover piece, thereby making it difficult for the electrode terminal provided on the body to contact the cover piece, but also plays a role in saving materials and reducing the self weight of the battery.

In an embodiment of the present application, the top wall is provided with a through hole, and the insulation layer includes a first part, a second part, and a third part, wherein the first part is located on the side of the top wall that is away from the body, the second part is located on the side of the top wall facing the body, and the third part is located inside the through hole and connected to the first part and the second part.

In the above technical solution, the first part and the second part cooperate with the third part to prevent, on one hand, the first part from falling off from the first convex part, thereby ensuring insulation and isolation between the first convex part and the cover piece. On the other hand, the second part is covered on the top wall, which strengthens the structural strength of the top wall, and the second part is filled in the cavity, which improves the structural strength of the first convex part, thereby making the top wall and the first convex part less prone to deformation as a whole, and improving the reliability of the connection between the battery and the cover piece.

In an embodiment of the present application, the first convex part further includes a flange, wherein the flange extends from the other end of the side wall towards a direction away from the cavity, and the flange is welded to the body.

In the above technical solution, by setting the flange, the contact area between the first convex part and the body is increased, thereby ensuring the reliable connection between the first convex part and the body, and improving the reliability of the connection between the battery and the cover piece.

In an embodiment of the present application, the outer surface of the body is provided with a groove, the first convex part is arranged in the groove, and the outer peripheral surface of the flange is welded with the inner peripheral surface of the groove.

In the above technical solution, a groove is provided on the outer surface of the body to define the installation position of the first convex part, and the inner peripheral surface of the groove limits the translation of the first convex part on the body, thereby playing a role in facilitating positioning and installation of the first convex part.

In an embodiment of the present application, the battery further includes:
a busbar component, configured to be electrically connected to the electrode terminal, wherein
the insulation layer includes a main body part and an extension part, wherein the main body part covers and is fixed to the first convex part, the extension part extends from the main body part to the electrode terminal, and a gap is formed between the extension part and the electrode terminal in the thickness direction of the body to accommodate the busbar component.

In the above technical solution, by making the extension part of the insulation layer isolate the electrode terminal and the cover piece, and forming a gap between the extension part and the electrode terminal, it is convenient to install the busbar component and prevent the busbar component from overlapping the cover piece, thereby improving the safety of the battery. On the other hand, due to the fact that the busbar component is hidden in the gap between the extension part and the electrode terminal instead of being exposed outside, the busbar component is not easily damaged, further improving the safety of the battery.

In an embodiment of the present application, the thickness of the extension part is less than the thickness of the main body part.

In the above technical solution, by making the thickness of the extension part smaller than the thickness of the main body part, the gap between the extension part and the electrode terminal is further increased, which facilitates the setting of the busbar component.

In an embodiment of the present application, the battery cell further includes a pressure relief mechanism, and the shell also includes a second wall arranged oppositely to the first wall, wherein the pressure relief mechanism is arranged on the second wall, and the pressure relief mechanism is configured to activate to release the internal pressure of the battery cell when the internal pressure or temperature of the battery cell reaches a threshold.

In the above technical solution, due to the second wall being away from the cover piece, the pressure relief mechanism provided on the second wall is far away from the cover piece, and the pressure relief mechanism releases in the direction away from the cover piece, so as to prevent the discharge released by the pressure relief mechanism from damaging the electrode terminal, busbar component, cover piece, and other structures. It also avoids damage to the electrical equipment connected to the cover piece, thereby ensuring the safety of the battery.

In an embodiment of the present application, the multiple battery cells form multiple battery cell groups, wherein each of the battery cell groups includes multiple battery cells arranged in a first direction, the multiple battery cell groups are arranged in a second direction, and the second direction is perpendicular to the first direction, wherein the insulation layer of the multiple battery cells in each of the battery cell groups is integrally molded.

In the above technical solution, multiple battery cells in each battery cell group are connected as a whole through the insulation layer, which improves the integrity of the battery cell group, thereby improving the integrity of the battery. Moreover, the connection area between the insulation layer and the cover piece is also increased, thereby improving the stability of the connection between the battery and the cover piece. On the other hand, there is no gap between the insulation layers of multiple battery cells, which reduces the probability of overlap between the battery cells and the cover piece, thereby further improving the insulation and isolation effect.

In the second aspect, the embodiment of the present application provides an electrical equipment, which includes the aforementioned battery.

In the technical solution of the present application, the battery used in the electrical equipment has a high energy density, which is conducive to the miniaturization of the electrical equipment, and the battery is not prone to leakage and short circuit, with high safety, such that the electrical equipment has higher safety.

In the third aspect, the embodiment of the present application provides a preparation method for a battery, which includes: providing multiple battery cells, wherein each battery cell includes a shell, an electrode terminal, and an insulation layer, wherein the shell includes a first wall, wherein the first wall includes a body and a first convex part, wherein the body has an inner surface and an outer surface arranged oppositely to each other in the thickness direction thereof, and the first convex part protrudes from the outer surface in a direction away from the inner part of the battery cells, wherein the electrode terminal is arranged on the body, and the insulation layer covers and is fixed on the first convex part; providing a box, wherein the box is provided with an accommodating cavity with an opening; and accommodating the multiple battery cells in the accommodating cavity, and bonding the insulation layer with a cover piece covering the opening to fixedly connect the multiple battery cells to the cover piece.

In the fourth aspect, the embodiment of the present application provides a preparation device for a battery, which includes: a first providing device, configured to provide multiple battery cells, wherein each battery cell includes a shell, an electrode terminal, and an insulation layer, wherein the shell includes a first wall, wherein the first wall includes a body and a first convex part, wherein the body has an inner surface and an outer surface arranged oppositely to each other in the thickness direction thereof, and the first convex part protrudes from the outer surface in a direction away from the inner part of the battery cells, wherein the electrode terminal is arranged on the body, and the insulation layer covers and is fixed on the first convex part; a second providing device, configured to provide a box, wherein the box is provided with an accommodating cavity with an opening; a first assembling device, configured to accommodate the multiple battery cells in the accommodating cavity; and a second assembling device, configured to bond the insulation layer with the cover piece covering the opening to fixedly connect the multiple battery cells to the cover piece.

### Brief Description of Drawings

In order to more clearly illustrate technical solutions of embodiments of the present application, drawings required for use in the embodiments will be described briefly below. It should be understood that the following drawings are merely illustrative of some embodiments of the present application, which therefore should not be understood as a limitation to the scope. For those of ordinary skill in the art, other related drawings can also be obtained according to these drawings without any inventive effort.
FIG. 1 is a schematic view of the vehicle provided in an embodiment of the present application;
FIG. 2 is an exploded view of the battery provided in an embodiment of the present application;
FIG. 3 is a three-dimensional view of the battery cell provided in an embodiment of the present application;
FIG. 4 is an exploded view of the battery cell provided in an embodiment of the present application;
FIG. 5 is a three-dimensional view of the end cover provided in an embodiment of the present application;
FIG. 6 is a top view of the end cover provided in an embodiment of the present application;
FIG. 7 is an A-A sectional view of FIG. 6;
FIG. 8 is an exploded view of the end cover and the insulating member provided in an embodiment of the present application;
FIG. 9 is a three-dimensional view of the end cover provided in another embodiment of the present application;
FIG. 10 is an exploded view of the end cover provided in another embodiment of the present application;
FIG. 11 is a top view of the first convex part provided in another embodiment of the present application;
FIG. 12 is a B-B sectional view of FIG. 11;
FIG. 13 is a top view of the end cover assembly provided in another embodiment of the present application;
FIG. 14 is a C-C sectional view of FIG. 13;
FIG. 15 is a partial enlarged view of FIG. 14;
FIG. 16 is a three-dimensional view of the battery cell provided in another embodiment of the present application;
FIG. 17 is a sectional view of the battery cell provided in another embodiment of the present application;
FIG. 18 is a partial enlarged view of FIG. 17;
FIG. 19 is an exploded view of the battery provided in another embodiment of the present application;
FIG. 20 is a schematic flowchart of the preparation method for the battery; and
FIG. 21 is a schematic block diagram of the preparation device for the battery.
Reference signs: 1000-vehicle; 100-battery; 101-box; 1011-accommodating cavity; 1012-opening; 102-battery cell group; 103-thermal management component; 104-busbar component; 1-battery cell; 11-shell; 111-casing; 112-end cover; 1121-body; 11211-groove; 11212-liquid injection hole; 1122-first convex part; 11221-top wall; 11222-side wall; 11223-through hole; 11224-flange; 1123-concave part; 113-insulation film; 12-electrode terminal; 13-insulation layer; 131-main body part; 1311-first part; 1312-second part; 1313-third part; 132-extension part; 14-insulating member; 141-second convex part; 15-electrode assembly; 151-tab; 152-adapter; 16-pressure relief mechanism; 200-motor; 300-controller; 400-cover piece; 500-preparation device; 510-first providing device; 520-second providing device; 530-first assembling device; 540-second assembling device; x-first direction; and y-second direction.

### Detailed Description of Embodiments

In order to make the objectives, technical solutions and advantages of the embodiments of the present application clearer, the technical solutions in the embodiments of the present application will be described clearly below with reference to the drawings in the embodiments of the present application. Obviously, the embodiments described are some of, rather than all of, the embodiments of the present application. All the other embodiments obtained by those of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprise/include", "provide", and any variations thereof in the description and claims, as well as the brief description of the drawings described above of the present application are intended to cover non-exclusive inclusions. The terms "first", "second", etc. in the description and the claims of the present application or the drawings are used to distinguish different objects, rather than to describe specific sequences or primary and secondary relationships.

In the present application, the phrase "embodiment" mentioned means that the specific features, structures, or characteristics described with reference to the embodiments may be encompassed in at least one embodiment of the present application. The phrase at various locations in the description does not necessarily refer to the same embodiment, or an independent or alternative embodiment exclusive of another embodiment.

In the description of the present application, it should be noted that unless otherwise explicitly specified and defined, the terms "install", "link", "connect" and "attach" should be understood in a broad sense, for example, it may be a fixed connection, a detachable connection, or an integrated connection; and may be a direct connection, an indirect connection by means of an intermediate medium, or internal communication between two elements. For those of ordinary skill in the art, the specific meaning of the foregoing terms in the present application may be understood according to specific circumstances.

The term "and/or" in the present application is only a description for the association relationship of the associated object, indicating that there can be three types of relationships. For example, A and/or B can indicate three conditions: the presence of A, the presence of both A and B, and the presence of B. In addition, the character "/" in the present application generally indicates that the associated objects before and after have an "or" relationship.

In the embodiments of the present application, the same reference signs represent the same components, and for simplicity, detailed descriptions for the same components are omitted in different embodiments. It should be understood that the thickness, length, width, and other dimensions of various components in the embodiments of the present application shown in the drawings, as well as the overall thickness, length, width, and other dimensions of the integrated device, are only illustrative examples and should not constitute any limitations to the present application.

The term "multiple (a plurality of)" in the present application refers to two or more (including two).

In the present application, the battery cell can include a primary battery, and a secondary battery, such as a lithium ion battery, a lithium sulfur battery, a sodium lithium ion battery, a sodium ion battery or a magnesium ion battery, etc., which is not limited by the embodiments of the present application. The battery cell can be cylindrical, flat, or rectangular, or be of other shapes, which is also not limited by the embodiments of the present application. Battery cells are generally divided into three types according to the packaging method: cylindrical battery cell, square battery cell, and soft pack battery cell, which is also not limited by the embodiments of the present application.

The battery mentioned in the embodiments of the present application refers to a single physical module that includes one or more battery cells to provide higher voltage and capacity. For example, the batteries mentioned in the present application may include battery modules or battery packs, etc. Battery packs generally include boxes used to encapsulate one or more battery cells. The box can prevent liquids or other foreign objects from affecting the charging or discharging of battery cells.

The battery cell includes an electrode assembly and an electrolyte, and the electrode assembly includes a positive electrode plate, a negative electrode plate, and a isolating member (separator). Battery cells mainly rely on metal ions moving between the positive and negative electrode plates to operate. The positive electrode plate includes a positive electrode current collector and a positive electrode active substance layer, wherein the positive electrode active substance layer is coated on the surface of the positive electrode current collector. The positive electrode current collector includes a positive electrode current collecting part and a positive electrode tab. The positive electrode current collecting part is coated with a positive electrode active substance layer, while the positive electrode tab is not coated with a positive electrode active substance layer. Taking lithium ion batteries as an example, the material for the positive electrode current collector can be aluminum, the positive electrode active substance layer includes positive electrode active substance, and the positive electrode active substance can be lithium cobalt oxide (lithium cobaltate), lithium iron phosphate, ternary lithium, or lithium manganese oxide (lithium manganate). The negative electrode plate includes a negative electrode current collector and a negative electrode active substance layer, wherein the negative electrode active substance layer is coated on the surface of the negative electrode current collector. The negative electrode current collector includes a negative electrode current collecting part and a negative electrode tab. The negative electrode current collecting part is coated with a negative electrode active substance layer, while the negative electrode tab is not coated with a negative electrode active substance layer. The material for the negative electrode current collector can be copper, the negative electrode active substance layer includes the negative electrode active substance, and the negative electrode active substance can be carbon, silicon or the like. The material of the isolating member can be PP (polypropylene) or PE (polyethylene), etc. In addition, the electrode assembly can be of a wound structure or a laminated structure (stacked structure), and the embodiments of the present application are not limited to this.

The battery cell also includes a shell and an electrode terminal, wherein the shell is used to accommodate the electrode assembly. The electrode terminals are installed on the shell, and the electrode terminals are used to be electrically connected to the tab of the electrode assembly to achieve charging and discharging of the electrode assembly.

The development of battery technology needs to consider multiple design factors simultaneously, such as energy density, cycle life, discharge capacity, charging and discharging rate, and other performance parameters. Moreover, it is also necessary to consider the safety of the battery.

In the above, the volume energy density of the battery is an important parameter that affects the duration of flight of the electrical equipment, such as electric vehicles. At the same battery volume, the higher the volume energy density is, the more battery cells can be accommodated, and the longer the duration of flight of electric vehicles is. In current battery design, the battery cells are first assembled into a battery cell group, and then assembled into a battery. In batteries, there are generally both structural components of the battery cell group and structural components of the battery, which greatly reduces the overall volume energy density of the battery. In addition, in some battery designs, battery cells can be directly assembled into the battery, thereby eliminating the structural components of the battery cell group and to some extent improving the volume energy density of the battery. However, the structural components of the battery, such as crossbeams, longitudinal beams, and other box beams, still exist, without maximizing the volume energy density of the battery. In order to improve the energy density of batteries, in some battery designs, consideration is given to removing the structural components of the battery, such as crossbeams, longitudinal beams, and other box beams. However, this will lead to the risk of electric leakage and short circuit caused by the battery cells being easily exposed outside. Therefore, it is difficult to balance the energy density and safety of the battery.

Based on the above considerations, in order to balance the energy density and safety of the battery, the embodiment of the present application provides a battery, which includes multiple battery cells and a box, wherein the box is provided with an accommodating cavity with an opening, and the multiple battery cells are accommodated in the accommodating cavity, wherein each battery cell includes a shell, an electrode terminal, and an insulation layer, wherein the shell includes a first wall, wherein the first wall includes a body and a first convex part, wherein the body has an inner surface and an outer surface arranged oppositely to each other in the thickness direction thereof, and the first convex part protrudes from the outer surface in a direction away from the inner part of the battery cells, wherein the electrode terminal is arranged on the body, and the insulation layer covers and is fixed on the first convex part, wherein the insulation layer is configured for bonding with the cover piece covering the opening to fixedly connect the multiple battery cells to the cover piece.

In the technical solution provided in the embodiment of the present application, by setting a first convex part that is higher than the body of the first wall on the first wall of the shell, and setting an insulation layer on the first convex part, the battery cell is directly bonded to the cover piece through the insulation layer on the first convex part, which can reduce or avoid the use of structural components such as box beams, and improve energy density, and also keep the body away from the cover piece, such that the electrode terminal provided on the body is not easily accessible to the cover piece, and first convex part near the cover piece is insulated and isolated from the cover piece, thus preventing the cover piece from being electrified and avoiding the risk of battery leakage and short circuit, thereby taking into account the energy density and safety of the battery simultaneously.

On the other hand, the electrode terminal is located between the body and the cover piece, thereby providing shielding and protection to the electrode terminal, and reducing the probability of damage to the electrode terminal.

The technical solution described in the embodiments of the present application is applicable to batteries and electrical equipment using batteries.

The electrical equipment can be a vehicle, a mobile phone, a portable device, a notebook computer, a ship, a spacecraft, an electric toy, an electric tool, and the like. The vehicle can be a fuel vehicle, a gas vehicle, or a new energy vehicle, wherein the new energy vehicle can be a pure electric vehicle, a hybrid electric vehicle, a range extended vehicle, or the like; the spacecraft comprises an aircraft, a rocket, a space shuttle, a spacecraft, and the like; the electric toys include a stationary or mobile electric toy such as a game console, an electric vehicle toy, an electric ship toy, an electric airplane toy, and the like; and the electric tools include a metal cutting electric tool, a grinding electric tool, an assembly electric tool, and an electric tool for railways, such as an electric drill, an electric grinder, an electric wrench, an electric screwdriver, an electric hammer, an electric impact drill, a concrete vibrator, and an electric planer. The foregoing electrical equipment is not specially limited in the embodiment of the present application.

For ease of description, the following embodiments will be described by taking an electrical equipment being a vehicle as an example.

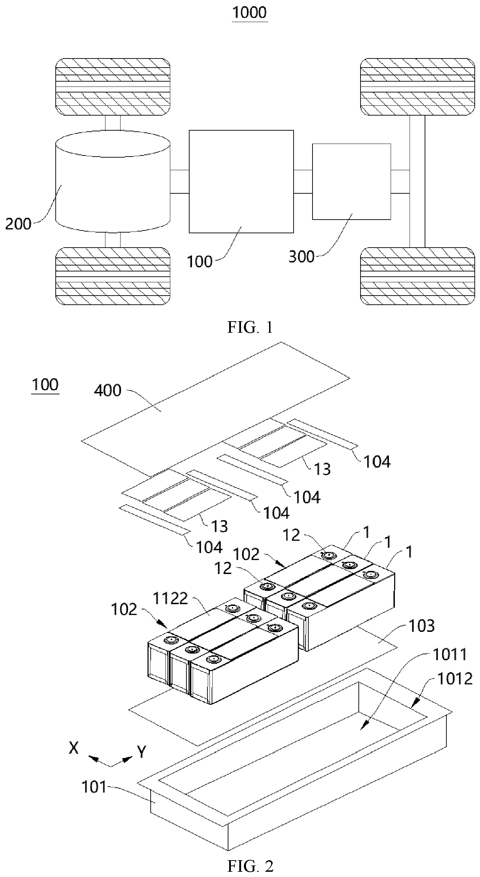

As shown in FIG. 1, the vehicle 1000 can be a fuel powered vehicle, a gas powered vehicle, or a new energy vehicle. The new energy vehicle can be a pure electric vehicle, a hybrid electric vehicle, or a range extended vehicle, etc. The vehicle 1000 can be provided therein with a battery 100, a controller 300, and a motor 200. The controller 300 is used to control the battery 100 to supply power to the motor 200. For example, battery 100 can be set at the bottom or front or rear of vehicle 1000. Battery 100 can be used for the power supply for the vehicle 1000. For example, battery 100 can serve as the operating power supply for vehicle 1000, and be used for the electrical system of the vehicle 1000, such as for the working power demand during startup, navigation, and operation of the vehicle 1000. In another embodiment of the present application, the battery 100 can not only serve as the operating power source for vehicle 1000, but also as the driving power source for vehicle 1000, thereby replacing or partially replacing fuel or natural gas to provide driving power for vehicle 1000.

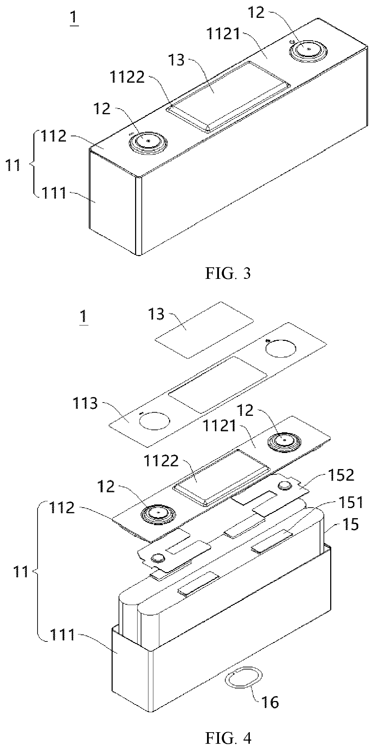

As shown in FIG. 2, the battery 100 includes multiple battery cells 1 and a box 101, wherein the box 101 is provided with an accommodating cavity 1011 with an opening 1012, and the multiple battery cells 1 are accommodated in the accommodating cavity 1011. As shown in FIGS. 3 and 4, each battery cell 1 includes a shell 11, an electrode terminal 12, and an insulation layer 13, wherein the shell 11 includes a first wall, wherein the first wall includes a body 1121 and a first convex part 1122, wherein the body 1121 has an inner surface and an outer surface arranged oppositely to each other in the thickness direction thereof, and the first convex part 1122 protrudes from the outer surface in a direction away from the inner part of the battery cells 1. The electrode terminal 12 is arranged on the body 1121, and the insulation layer 13 covers and is fixed on the first convex part 1122, wherein the insulation layer 13 is configured for bonding with the cover piece 400 covering the opening 1012 to fixedly connect the multiple battery cells 1 to the cover piece 400.

Battery 100 can also be referred to as a battery pack. Multiple battery cells 1 can be connected in series, parallel, or hybrid, and hybrid connection refers to a combination of series connection and parallel connection. Optionally, multiple battery cells 1 can first be connected in series, parallel, or hybrid to form a battery module, and multiple battery modules can then be connected in series, parallel, or hybrid to form a battery 100. That is to say, multiple battery cells 1 can directly form a battery 100, or they can first form a battery module, which then forms a battery 100. As shown in FIG. 2, multiple battery cells 1 directly form battery 100.

Box 101 is a component used to accommodate multiple battery cells 1, so as to avoid liquid or other foreign objects from affecting the charging or discharging of battery cells 1. The shape of the box 101 can be a hollow cylinder, a cuboid, or a special-shaped body, etc. A accommodating cavity 1011 is formed inside the box 101. One surface of the box 101 is an opened surface, that is, an opening 1012 communicating with the accommodating cavity 1011 is arranged on the opened surface, and multiple battery cells 1 are placed in the accommodating cavity 1011 after being connected in parallel, series or hybrid. As shown in FIG. 2, the shape of the box 101 is a hollow cuboid, and one surface of the cuboid forms the opening 1012.

The shell 11 of the battery cell 1 is of a hollow structure internally provided with a accommodating cavity 1011 for accommodating the electrode assembly 15. The shell 11 can be configured into a variety of shapes, such as a cylinder structure, a cuboid structure, and the like. Optionally, the shape of the shell 11 is a cuboid.

The shell 11 includes a casing 111 and an end cover 112, wherein the casing 111 is a cylinder with an opening at one end, and the end cover 112 is in a plate-shaped structure that closes the opening of the casing 111. According to the shape of the shell 11, the casing 111 can be a cylinder, a square cylinder, or a special-shaped cylinder, etc. Optionally, the casing 111 is a square cylinder (cuboid cylinder). According to the shape of the shell 11, the end cover 112 can be of a circular plate-shaped structure, a square plate-shaped structure, or a special-shaped plate-shaped structure, etc. Optionally, the end cover 112 is of a rectangular plate-shaped structure to fit with the square cylinder. The end cover 112 and casing 111 can be independent or integrated.

The first wall of shell 11 can be the end cover 112, the bottom wall of the casing 111 opposite to the end cover 112, or the side wall 11222 on one side of casing 111. Optionally, the first wall of the shell 11 is the end cover 112. The end cover 112 includes a body 1121 and a first convex part 1122. The body 1121 is connected to the casing 111, and the inner surface of the body 1121 refers to the surface of the body 1121 facing the casing 111 in the thickness direction. The inner surface of the body 1121 and the inner wall of the casing 111 jointly form the internal space of the battery cell 1. The outer surface of the body 1121 refers to the surface of the body 1121 facing away from the casing 111 in the thickness direction. The first convex part 1122 protrudes from the body 1121 towards the exterior of the battery cell 1 along the thickness direction of the end cover 112, and the body 1121 is concave relative to the first convex part 1122 along the thickness direction, thereby forming a height space for allowing the installation of the electrode terminal 12.

The electrode terminal 12 is a component of the battery cell 1 used for inputting or outputting electrical energy. The electrode terminal 12 penetrates through the body 1121 to achieve the electrical connection between the interior and exterior of the battery cell 1. As shown in FIG. 3 and 4, two electrode terminals 12 are provided, and the two electrode terminals 12 have opposite polarity, in which one serves as the positive electrode and the other serves as the negative electrode. The electrode terminal 12 is generally insulated from the shell 11 to avoid the shell 11 from being electrified and reduce the risk of electric leakage and short circuit. For example, an insulation sealing ring is set between the electrode terminal 12 and the body 1121 to achieve the electrode terminal 12 to be mounted on the body 1121 in an insulating and sealing manner.

The cover piece 400 is a component that covers the opening 1012 of the box 101. The cover piece 400 can be a part of the box 101, or alternatively, the cover piece 400 can be a part of the electrical equipment.

The insulation layer 13 is a component used for insulating and isolating the first convex part 1122 and the cover piece 400. Multiple battery cells 1 are respectively bonded to the cover piece 400 through their insulation layer 13 to achieve the fixation of multiple battery cells 1, thereby fixing the entire battery 100.

In the embodiment of the present application, by setting a first convex part 1122 that is higher than the body 1121 of the first wall on the first wall of the shell 11, and setting an insulation layer 13 on the first convex part 1122, the battery cell 1 is directly bonded to the cover piece 400 through the insulation layer 13 on the first convex part 1122, which can reduce or avoid the use of structural components such as box beams, and improve energy density, and also keep the body 1121 away from the cover piece 400, such that the body 1121 itself and the electrode terminal 12 provided on the body 1121 are not easily accessible to the cover piece 400, and first convex part 1122 near the cover piece 400 is insulated and isolated from the cover piece 400, thus preventing the cover piece 400 from being electrified and avoiding the risk of electric leakage and short circuit of the battery 100, thereby taking into account the energy density and safety of the battery 100 simultaneously.

Optionally, the battery cell 1 also includes an insulation film 113, which is located on the surface of the body 1121 facing the cover piece 400 to cover the region of the body 1121 where the electrode terminal 12 and the first convex part 1122 are not provided, thereby further preventing the risk of electric leakage and short circuit caused by the body 1121 being electrified when the insulation between the body 1121 and the electrode terminal 12 fails.

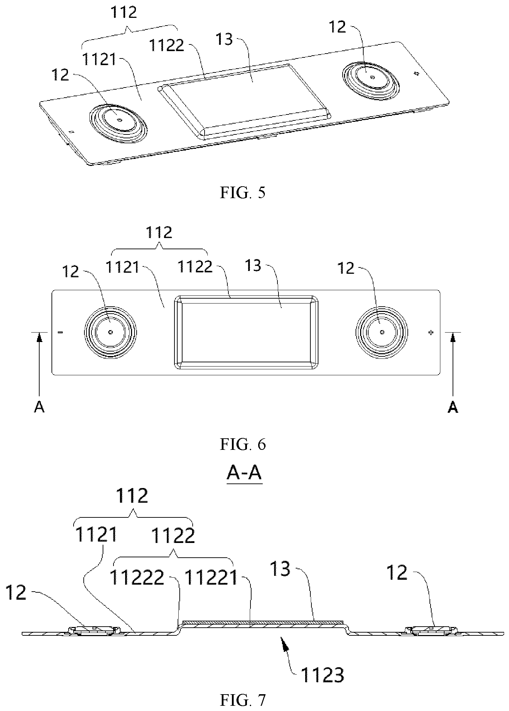

According to some embodiments of the present application, as shown in FIGS. 5, 6, and 7, in the thickness direction of the body, the height of the insulation layer 13 protruding from the outer surface is greater than the height of the electrode terminal 12 protruding from the outer surface.

The height of the insulation layer 13 protruding from the outer surface refers to the distance from the surface of insulation layer 13 away from the the inner side of the battery cell 1 to the outer surface of the body 1121.

The height of the electrode terminal 12 protruding from the outer surface refers to the distance from the end of electrode terminal 12 away from the the inner side of the battery cell 1 to the outer surface of the body 1121.

Since the height of the insulation layer 13 protruding from the outer surface is greater than the height of the electrode terminal 12 protruding from the outer surface, it is ensured that the electrode terminal 12 does not contact the cover piece 400, so as to further avoid electric leakage and short circuit and improve the safety of the battery 100.

Optionally, the height of the first convex part 1122 protruding from the outer surface is greater than that of the electrode terminal 12 protruding from the outer surface. In this way, only an insulation layer 13 with a smaller thickness needs to be provided, which can ensure that the electrode terminal 12 and the first wall do not contact the cover piece 400. Therefore, the insulation layer 13 has a wider selection range of materials, which can meet more usage needs and reduce the difficulty of production and manufacturing. For example, the insulation layer 13 can be selected as a paint layer with insulation properties coated on the first convex part 1122 or the cover piece 400. The thickness of the paint layer is smaller, which can further improve the energy density of the battery 100. The paint layer is easy to process, and can be dried and formed only by spraying on the surface of the first convex part 1122 or the cover piece 400, which is not easy to fall off, and omits a bonding step.

According to some embodiments of the present application, after the box 101 is mounted on the vehicle 1000, the cover piece 400 is located above the box 101.

As shown in FIG. 2, the opening 1012 of the box 101 faces upwards, and the insulation layers 13 of multiple battery cells 1 are respectively bonded to the cover piece 400. The box 101 is located below the multiple battery cells 1. With the cooperation of the cover piece 400 and the box 101, the stability of the battery cell 1 in the box 101 is effectively improved, and the integrity of the battery 100 is improved. Moreover, the gravity of the battery 100 acts on the cover piece 400, and the cover piece 400 serves as the main load-bearing structure, thereby improving the overall structural strength of the battery 100.

According to some embodiments of the present application, the cover piece 400 is the floor of the vehicle 1000.

The cover piece 400 is the floor of the vehicle 1000, which means that the insulation layer 13 of battery cell 1 is directly bonded to the surface of the floor of vehicle 1000 facing the ground.

The floor of the vehicle 1000 has higher strength and stiffness. Multiple battery cells 1 are fixed on the floor of the vehicle 1000, which can improve the overall stiffness and structural strength of the battery 100 and enable the battery 100 to be well integrated with the vehicle. Moreover, the battery cell 1 is fixed on the floor of the vehicle 1000, which can further avoid or reduce the use of box beams, thereby simplifying the structure of the battery 100, and improving the volume energy density of the battery 100.

In some embodiments, the cover piece 400 can also be a part of the box 101, with one surface of the cover piece 400 bonded to the insulation layer 13 of multiple battery cells 1, and the other surface of the cover piece 400 connected to the vehicle 1000.

According to some embodiments of the present application, the first convex part 1122 is made of the same material as body 1121.

The material of casing 111 and end cover 112, namely, the material of shell 11, can be various, which generally is metal material, such as copper, iron, aluminum, steel, aluminum alloy, etc. In this embodiment, the material of the body 1121 is the material of the end cover 112, which is a metal material with relatively high strength. By setting the material of the first convex part 1122 to be the same as the body 1121, the strength of the first convex part 1122 is higher and not easy to deform. Due to the connection between the battery cell 1 and the cover piece 400 through the insulation layer 13 on the first convex part 1122, when the strength of the first convex part 1122 is higher, the connection between the battery 100 and the cover piece 400 can be more stable and reliable.

Moreover, by making the first convex part 1122 and the body 1121 made of the same material, the first convex part 1122 and the body 1121 are easy to be welded or integrally molded.

According to some embodiments of the present application, the first convex part 1122 and the body 1121 are integrally molded.

The first convex part 1122 and the body 1121 are integrally molded, which means that the first convex part 1122 and the body 1121 are formed by stamping a whole piece of raw material, or the first convex part 1122 and the body 1121 are integrally molded by cutting a whole piece of raw material, or the first convex part 1122 and the body 1121 are integrally molded by casting.

The first convex part 1122 and the body 1121 are integrally molded, with good integrity and high structural strength, thereby ensuring stable and reliable connection between the battery 100 and the cover piece 400.

According to some embodiments of the present application, as shown in FIG. 7, a concave part 1123 is formed at a position on the body 1121 corresponding to the first convex part 1122, and the concave part 1123 is concave from the inner surface towards a direction away from the inside of the battery cell 1.

By forming a concave part 1123 on the back of the convex part, the material consumption of the shell 11 can be reduced, costs can be saved, the internal space of the battery cell 1 can be increased, the capacity of the battery cell 1 can be increased, and the energy density can be improved.

According to some embodiments of the present application, as shown in FIGS. 4, 7, and 8, each battery cell 1 further includes an insulating member 14 and an electrode assembly 15. The electrode assembly 15 is arranged inside the shell 11, and the insulating member 14 is arranged between the first wall and the electrode assembly 15. A second convex part 141 is formed on one side of the insulating member 14 facing the first wall. The second convex part 141 is accommodated in the concave part 1123 to support the first convex part 1122.

The electrode assembly 15 is a component in the battery cell 1 that undergoes electrochemical reactions. The electrode assembly 15 includes a first electrode plate, a second electrode plate, and an isolating member. The first electrode plate and the second electrode plate are coated with active substance, respectively. The polarity of the first electrode plate and the polarity of the second electrode plate are opposite. In other words, one of the first electrode plate and the second electrode plate is the positive electrode plate, and the other of the first electrode plate and the second electrode plate is the negative electrode plate. The battery cell 1 mainly relies on movement of metal ions between the positive electrode plate and the negative electrode plate to work. The isolating member is used to separate the first electrode plate and second electrode plate, so as to prevent direct contact between the first and second electrode plates from causing a short circuit. The first electrode plate, second electrode plate, and isolating member belong to the prior art. Although not shown in the drawings of the description of the present application, those skilled in the art should understand that their specific structure is in the form of a strip or a sheet. The first electrode plate, second electrode plate, and isolating member in the form of a strip are stacked and then wound to form an electrode assembly of a winding structure, or the first electrode plate, second electrode plate, and isolating member in the form of a sheet are subjected to cross stacking to form an electrode assembly of a stacking structure. The part of the first electrode plate that is not coated with active substance forms a first tab, while the part of the second electrode plate that is not coated with active substance forms a second tab. The first tab and the second tab extend from the end portion of the electrode assembly 15 and are respectively connected to two electrode terminals 12 with opposite polarity, so as to achieve input and output of electrical energy. Optionally, the battery cell 1 also includes an adapter 152, which is used to achieve electrical connection between the tab 151 and the electrode terminal 12.

The insulating member 14 is made of an insulating material arranged inside the shell 11 to isolate the electrode assembly 15 and the shell 11. For example, insulating member 14 can be a polymer insulation film 113 wrapped on the surface of electrode assembly 15, or a plastic component set between the electrode assembly 15 and the shell 11. When the first wall of the shell 11 is the end cover 112, optionally, the insulating member 14 is a plastic component arranged between the end cover 112 and the electrode assembly 15, the second convex part 141 is a part of the insulating member 14, and the second convex part 141 is used for embedding in the concave part 1123.

By making the second convex part 141 of the insulating member 14 cooperate with the concave part 1123 of the first wall, it plays a limiting role to ensure that the insulating member 14 does not move, and to ensure that the insulating member 14 isolates the electrode assembly 15 and the first wall, so as to prevent the first wall from contacting the electrode assembly 15 to have electricity, reduce the risk of electric leakage and short circuit, and improve the safety of the battery 100.

On the other hand, when the second convex part 141 is located in the concave part 1123, it is located on the back of the first convex part 1122, thereby playing a role in supporting the first convex part 1122, avoiding deformation of the first convex part 1122, and further improving the connection stability between the battery 100 and the cover piece 400.

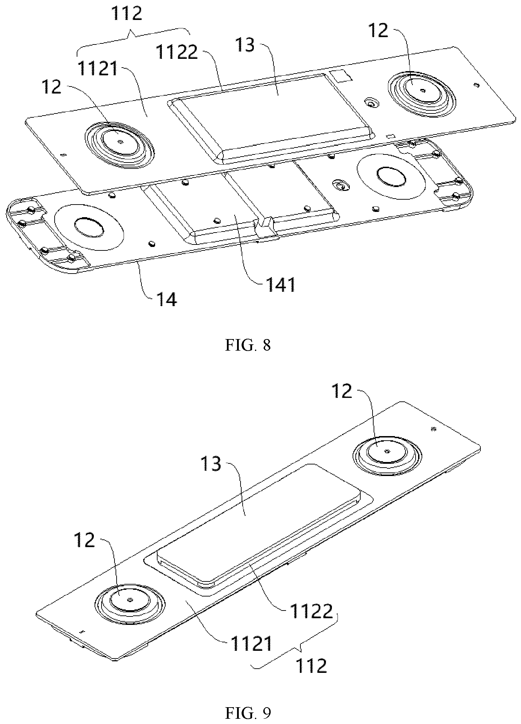

Optionally, as shown in FIG. 8, the second convex part 141 includes two parts, with the two parts spaced apart. By setting the second convex part 141 as two parts spaced apart, the assembly fault tolerance can be improved. When the manufacturing tolerance of the concave part 1123 results in a smaller aperture of the concave part 1123, the two parts can be brought closer to each other by bing pressed, so that the second convex part 141 can be assembled in the concave part 1123. On the other hand, when there is extrusion force between the inner wall of the concave part 1123 and the second convex part 141, it can further ensure that the second convex part 141 is closely attached to the inner wall of the concave part 1123, thereby playing a better role in supporting the concave part 1123, improving the resistance of the first convex part 1122 to deformation and enhancing the structural strength of the first convex part 1122.

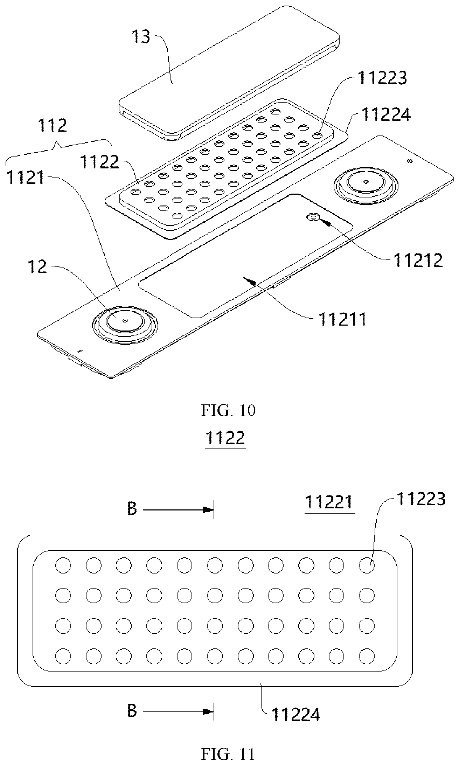

According to some embodiments of the present application, as shown in FIGS. 9 and 10, the first convex part 1122 and the body 1121 are arranged separately, and the first convex part 1122 is welded to the body 1121.

Compared to the integrated molding of the first convex part 1122 and the body 1121, the method of separately arranging the first convex part 1122 and the body 1121 is convenient for adjusting the height of the first convex part 1122 protruding from the body 1121 according to actual needs, thereby improving the applicability of the battery 100.

On the other hand, the separately arranging method also has the function of facilitating the processing and modification. For example, the shell 11 of battery cell 1 can be produced according to the existing design. By welding the first convex part 1122 on the first wall of the shell 11 to form a new structure of the shell 11, which eliminates the need for adjusting the production line and saves the cost of re-opening the mold. For another example, by welding the first convex part 1122 on multiple battery cells 1 of the existing battery 100, respectively, the battery 100 can achieve the modification of eliminating the box beam structure, thereby improving the energy density of the battery 100.

According to some embodiments of the present application, as shown in FIGS. 10, 11, and 12, the first convex part 1122 includes a top wall 11221 and a side wall 11222. The top wall 11221 is arranged oppositely to the body 1121, and the side wall 11222 surrounds the top wall 11221. One end of the side wall 11222 is connected to the top wall 11221, and the other end of the side wall 11222 extends towards the body 1121. The top wall 11221, the side wall 11222, and the body 1121 jointly define a cavity, and the insulation layer 13 covers the top wall 11221.

The first convex part 1122 is a hollow and convex structure formed on the body 1121. By setting the insulation layer 13 on the top wall 11221 of the first convex part 1122 and connecting the cover piece 400, the body 1121 can be far away from the cover piece 400, thereby making it difficult for the electrode terminal 12 provided on the body 1121 to contact the cover piece 400, and also saving materials and reducing the self weight of the battery 100.

In some embodiments, as shown in FIG. 10, the battery cell 1 further includes a liquid injection hole 11212 for injecting electrolyte solution into the interior of the shell 11. The liquid injection hole 11212 is set on a region of the body 1121 for jointly defining the cavity with the top wall 11221 and the side wall 11222. By setting the first convex part 1122 and the body 1121 in a split type, the first convex part 1122 is connected to the body 1121 after liquid injection, thereby playing a role in shielding and protecting the liquid injection hole 11212, and also preventing the liquid injection hole 11212 from being damaged and leaking the liquid to pollute other battery cells 1 inside the battery 100. Moreover, the electrolyte solution that overflows during liquid injection will also be sealed in the cavity to avoid contamination.

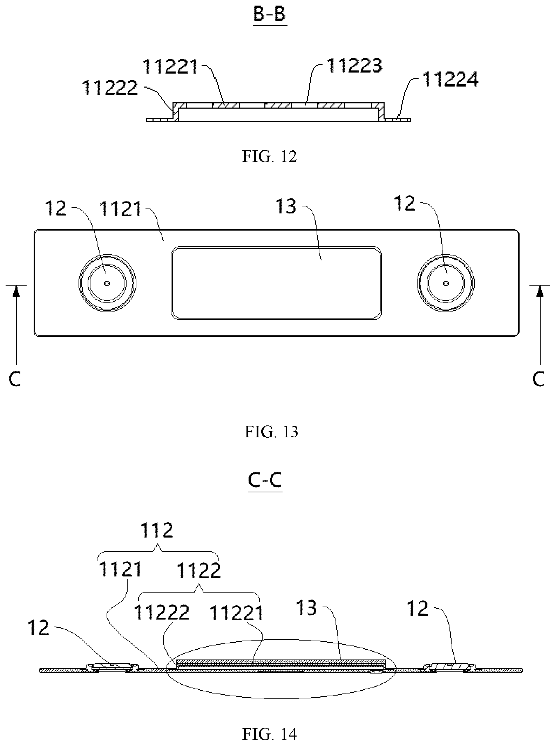

According to some embodiments of the present application, as shown in FIGS. 11 and 12, the top wall 11221 is provided with a through hole 11223. As shown in FIGS. 13, 14, and 15, the insulation layer 13 includes a first part 1311, a second part 1312, and a third part 1313. The first part 1311 is located on the side of the top wall 11221 away from the body 1121, the second part 1312 is located on the side of the top wall 11221 facing the body 1121, and the third part 1313 is located in the through hole 11223 and connects the first part 1311 and the second part 1312.

By setting a through hole 11223 on the top wall 11221, the cavity jointly defined by the top wall 11221, side wall 11222, and body 1121 is communicated with the external space through the through hole 11223.

The first part 1311 is located on the side of the top wall 11221 away from the body 1121, which means that the first part 1311 covers the surface of the top wall 11221 facing the cover piece 400, so as to connect the cover piece 400. The second part 1312 is located on the side of the top wall 11221 facing the body 1121, which means that the second part 1312 covers the surface of the top wall 11221 facing the body 1121.

The third part 1313 passes through the through hole 11223 and connects the first part 1311 and the second part 1312. On one hand, the first part 1311 is prevented from falling off from the first convex part 1122, thereby ensuring insulation and isolation between the first convex part 1122 and the cover piece 400. On the other hand, the second part 1312 is covered on the top wall 11221, which strengthens the structural strength of the top wall 11221, and the second part 1312 is filled in the cavity, which improves the structural strength of the first convex part 1122, thereby making the top wall 11221 and the first convex part 1122 less prone to deformation as a whole, and improving the reliability of the connection between the battery 100 and the cover piece 400.

The material of insulation layer 13 is a polymer insulation material that can be molten.

The first part 1311, the second part 1312, and the third part 1313 can be respectively molded and connected by hot melting. For example, before welding the first convex part 1122 and the body 1121, the second part 1312 is placed in the cavity, and after welding the first convex part 1122 and the body 1121, the first part 1311 is covered on the surface of the top wall 11221 facing the cover piece 400. The first part 1311 is heated, so as to make the material of the first part 1311 melt and then pass through the through hole 11223 to form the third part 1313 and connect the second part 1312.

The first part 1311, second part 1312, and third part 1313 can be integrally molded by using insulating materials. For example, before or after welding the first convex part 1122 and the body 1121, molten insulating material is injected into the cavity through the through hole 11223 to form the second part 1312, the overflowed insulating material fills the through hole 11223 to form the third part 1313, and the overflowed insulation material also covers the side of the top wall 11221 facing the cover piece 400, so as to form the first part 1311.

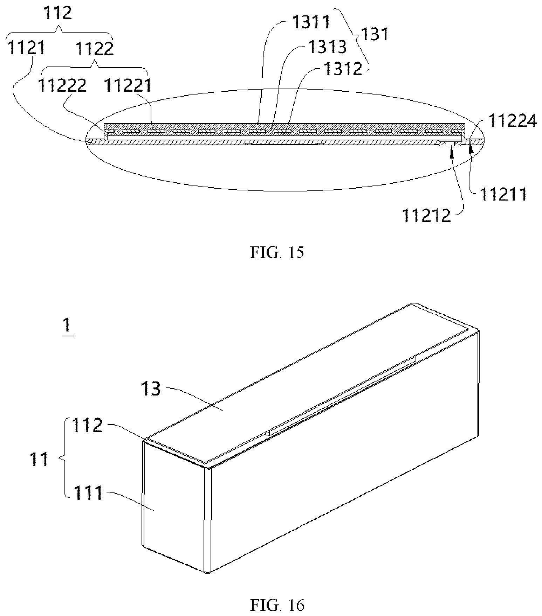

According to some embodiments of the present application, as shown in FIG. 15, the first convex part 1122 further includes a flange 11224, wherein the flange 11224 extends from the other end of the side wall 11222 towards a direction away from the cavity, and the flange 11224 is welded to the body 1121.

The flange 11224 refers to a part extending along a direction parallel to the body 1121 from one end of the side wall 11222 away from the top wall 11221.

By setting the flange 11224, the contact area between the first convex part 1122 and the body 1121 is increased, thereby ensuring the reliable connection between the first convex part 1122 and the body 1121, and improving the reliability of the connection between the battery 100 and the cover piece 400.

According to some embodiments of the present application, as shown in FIGS. 10 and 15, the outer surface of the body 1121 is provided with a groove 11211, the first convex part 1122 is arranged inside the groove 11211, and the outer peripheral surface of the flange 11224 is welded with the inner peripheral surface of the groove 11211.

The outer surface of the body 1121 is provided with a groove 11211, which means that the outer surface of the body 1121 is concave towards the interior of the battery cell 1 along the thickness direction of the body 1121.

A groove 11211 is provided on the outer surface of the body 1121 to define the installation position of the first convex part 1122, and the inner peripheral surface of the groove 11211 limits the translation of the first convex part 1122 on the body 1121, thereby playing a role in facilitating positioning and installation of the first convex part 1122.

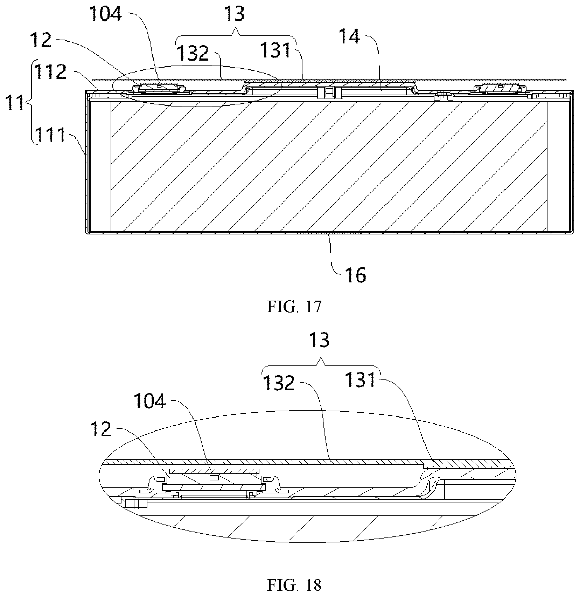

According to some embodiments of the present application, as shown in FIGS. 16 and 17, the battery 100 further includes a busbar component 104, wherein the busbar component 104 configured to be electrically connected to the electrode terminal 12, wherein the insulation layer 13 includes a main body part 131 and an extension part 132, wherein the main body part 131 covers and is fixed to the first convex part 1122, the extension part 132 extends from the main body part 131 to the electrode terminal 12, and a gap is formed between the extension part 132 and the electrode terminal 12 in the thickness direction of the body 1121, so as to accommodate the busbar component 104.

The busbar component 104 is a component used to achieve electrical connection between multiple battery cells 1, such as parallel, series, or hybrid connection. Specifically, the busbar component 104 can achieve electrical connection between battery cells 1 by being connected to the electrode terminal 12 of battery cell 1. Further, the busbar component 104 can be fixed to the electrode terminal 12 of the battery cell 1 by welding. The electrical energy of multiple battery cells 1 can be further led out to the outside of the box 101 through a conductive mechanism. Optionally, the conductive mechanism may also belong to the busbar component 104.

The main body part 131 of the insulation layer 13 is the part configured to cover and connect the first convex part 1122, and the extension part 132 of the insulation layer 13 is the part configured to insulate and isolate the electrode terminal 12 and the cover piece 400. For example, when the insulation layer 13 includes the first part 1311, second part 1312, and third part 1313 mentioned above, the main body part 131 is composed of the first part 1311, second part 1312, and third part 1313, and the insulation layer 13 extends from the first part 1311 to above the electrode terminal 12. For another example, the main body part 131 of the insulation layer 13 is directly bonded to the surface of the first convex part 1122, and the extension part 132 extends from the main body part 131 to above the electrode terminal 12. For yet another example, the insulation layer 13 is an insulation paint layer sprayed on the cover piece 400, with the main body part 131 corresponding to the position of the first convex part 1122, and the extension part 132 corresponding to the position of the body 1121 to be located above the electrode terminal 12.

By making the extension part 132 of the insulation layer 13 isolate the electrode terminal 12 and the cover piece 400, and forming a gap between the extension part 132 and the electrode terminal 12, it is convenient to install the busbar component 104 and prevent the busbar component 104 from overlapping the cover piece 400, thereby improving the safety of the battery 100. On the other hand, due to the fact that the busbar component 104 is hidden in the gap between the extension part 132 and the electrode terminal 12 instead of being exposed outside, the busbar component 104 is not easily damaged, further improving the safety of the battery 100.

According to some embodiments of the present application, as shown in FIG. 18, the thickness of the extension part 132 is smaller than the thickness of the main body part 131.

The thickness of the extension part 132 is smaller than the thickness of the main body part 131, which means that the extension part 132 and the main body part 131 form a T-shaped structure to further increase the gap between the extension part 132 and the electrode terminal 12, thereby facilitating the setting of the busbar component 104.

According to some embodiments of the present application, as shown in FIGS. 4 and 17, the battery cell 1 further includes a pressure relief mechanism 16, and the shell 11 also includes a second wall arranged oppositely to the first wall, wherein the pressure relief mechanism 16 is arranged on the second wall, and the pressure relief mechanism 16 is configured to activate to release the internal pressure of the battery cell 1 when the internal pressure or temperature of the battery cell 1 reaches a threshold.

The pressure relief mechanism 16 refers to an element or component that is activated to release the internal pressure or temperature when the internal pressure or temperature of the battery cell 1 reaches a predetermined threshold. The threshold design varies depending on the different design requirements. The threshold may depend on the materials of one or more of the positive electrode plate, the negative electrode plate, the electrolyte solution, and the separator in the battery cell 1. The "activate" mentioned in the present application means that the pressure relief mechanism 16 acts or be activated to a certain state, thereby allowing the internal pressure and temperature of battery cell 1 to be released. The actions generated by the pressure relief mechanism 16 can include but are not limited to a state that at least a portion of the pressure relief mechanism 16 is broken, crushed, torn or opened, and so on. When the pressure relief mechanism 16 is activated, the high-temperature and high-pressure substances inside the battery cell 1 will be discharged outside from the activated part as emissions. In this way, battery cell 1 can be depressurized under controllable pressure or temperature, thereby avoiding potential more serious accidents. The emissions from battery cell 1 mentioned in the present application include but are not limited to: the electrolyte solution, the dissolved or split positive and negative electrode plates, the fragments of separator, the high-temperature and high-pressure gases generated by reactions, flames, and so on.

The pressure relief mechanism 16 on battery cell 1 has a significant influence on the safety of battery 100. For example, in case of short circuit, overcharge and other phenomena, thermal runaway may occur inside the battery cell 1, which leads to sudden rise of pressure or temperature. In this case, the internal pressure and temperature can be released outward through the actuation of the pressure relief mechanism 16 to prevent the explosion and fire of battery cell 1. The pressure relief mechanism 16 can take the forms such as explosion-proof valves, gas valves, pressure relief valves, or safety valves, and can specifically use pressure-sensitive or temperature-sensitive elements or structures. That is to say, when the internal pressure or temperature of battery cell 1 reaches a predetermined threshold, the pressure relief mechanism 16 executes actions or the weakened structure provided in the pressure relief mechanism 16 is damaged, thereby forming a through port or channel for internal pressure or temperature to be released.

The first wall of shell 11 faces the cover piece 400, so the second wall opposite to the first wall faces away from the cover piece 400. For example, when the first wall of shell 11 is the end cover 112, the second wall of shell 11 is the bottom wall of casing 111. On the contrary, when the first wall of shell 11 is the bottom wall of casing 111, the second wall of shell 11 is the end cover 112. In some embodiments, the first and second walls of the shell 11 can also be two opposite side walls 11222 of the casing 111.

Due to the second wall being away from the cover piece, the pressure relief mechanism 16 provided on the second wall is far away from the cover piece 400, and the pressure relief mechanism 16 releases in the direction away from the cover piece 400, so as to prevent the discharge released by the pressure relief mechanism 16 from damaging the electrode terminal 12, busbar component 104, cover piece 400, and other structures. It also avoids damage to the electrical equipment connected to the cover piece 400, thereby ensuring the safety of the battery 100.

Optionally, a first avoidance opening (not shown in the drawings) is provided on the bottom wall of the box 101, which is configured to avoid the pressure relief mechanism 16, so as not to block the release of the pressure relief mechanism 16.

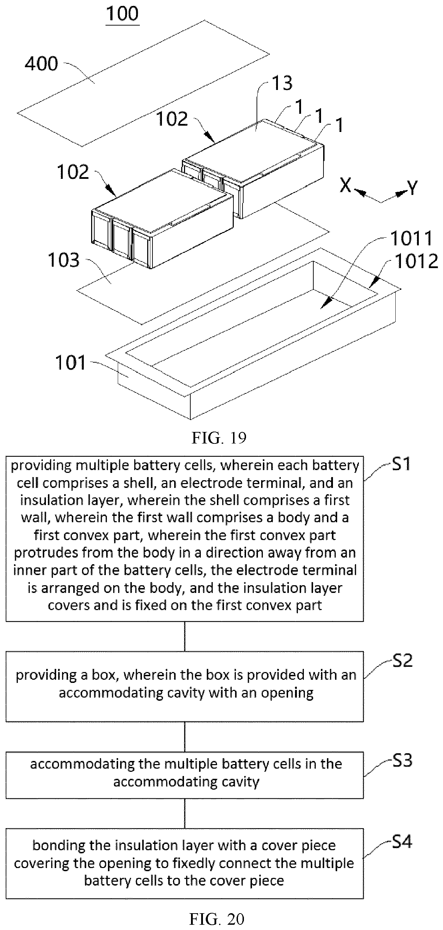

Optionally, as shown in FIGS. 2 and 19, the battery 100 also includes a thermal management component 103, which is arranged on the side of the battery cell 1 away from the cover piece 400 and between the bottom wall of the box 101 and a plurality of battery cells 1. The thermal management component 103 adjusts the temperature of the battery cell 1 by heat exchange with the battery cell 1, so as to solve the problem of thermal runaway of the battery cell 1 due to excessive temperature rise, and solve the problem of inconsistent charging and discharging capabilities among multiple battery cells 1 due to significant temperature differences.

Optionally, the thermal management component 103 is equipped with a second avoidance opening (not shown in the drawings) at the position corresponding to the pressure relief mechanism 16, wherein the second avoidance opening is communicated with the first avoidance opening and configured to avoid the pressure relief mechanism 16, so as not to block the release of the pressure relief mechanism 16.

Optionally, the thermal management component 103 contains a phase change material, which is used to absorb the heat of the emissions of the pressure relief mechanism 16, so as to prevent the heat of the emissions from affecting other battery cells 1, and alleviate or avoid a wider range of thermal runaway problem. Optionally, the phase change material can also be provided outside the thermal management component 103 and between the side of multiple battery cells 1 away from the cover piece 400 and the bottom wall of the box 101.

According to some embodiments of the present application, as shown in FIG. 19, multiple battery cells 1 form multiple battery cell groups 102. Each battery cell group 102 includes multiple battery cells 1 arranged along the first direction X, and the multiple battery cell groups 102 are arranged along the second direction Y, wherein the second direction Y is perpendicular to the first direction X, and the insulation layers 13 of the multiple battery cells 1 in each battery cell group 102 are integrally molded.

The box 101 is of a cuboid, the first direction X is the width direction of the cuboid, and the second direction Y is the length direction of the cuboid. The opening 1012 of the box 101 is parallel to the first direction X and the second direction Y, and the first convex parts 1122 and the insulation layers 13 of the plurality of battery cells 1 are exposed to the opening 1012 of the box 101 to facilitate connecting to the cover piece 400.

The electrode terminals 12 of battery cells 1 in each battery cell group 102 are arranged along the first direction X, and the first convex parts 1122 of battery cells 1 in each battery cell group 102 are arranged along the first direction X, so that the insulation layers 13 are also arranged along the first direction X. By setting multiple insulation layers 13 of one battery cell group 102 as a whole, the integrity of battery 100 is improved. The insulation layer 13 of any battery cell 1 is connected to the cover piece 400, which can maintain the connection between other battery cells 1 and the cover piece 400, and also increase the connection area between the insulation layer 13 and the cover piece 400, thereby improving the connection stability between the battery 100 and the cover piece 400. On the other hand, there is no gap between the insulation layers 13 of multiple battery cells 1, which reduces the probability of overlap between the battery cells 1 and the cover piece 400, thereby further improving the insulation and isolation effect.

According to some embodiments of the present application, the embodiment of the present application also provides an electrical equipment, which includes the aforementioned battery 100.

Battery 100 is used to provide electrical energy for the operation of electrical equipment. As shown in FIG. 1, the electrical equipment is the vehicle 1000, the vehicle 1000 is equipped with the aforementioned battery 100. The battery 100 is used to provide electrical energy to the motor 200 of the vehicle 1000, as well as to provide electrical energy to other functional components such as the controller 300.

Optionally, the cover piece 400 is a part of the electrical equipment to connect the battery 100 and the electrical equipment as a whole.

As for the electrical equipment provided in the present application, the battery 100 thereof is not prone to electric leakage or short circuit, with higher safety, and the battery 100 has higher energy density, which is conducive to miniaturization of electrical equipment.

According to some embodiments of the present application, as shown in FIG. 20, the embodiment of the present application provides a preparation method for a battery 100, which includes:
S1, providing multiple battery cells 1, wherein each battery cell 1 includes a shell 11, an electrode terminal 12, and an insulation layer 13, wherein the shell 11 includes a first wall, wherein the first wall includes a body 1121 and a first convex part 1122, wherein the body 1121 has an inner surface and an outer surface arranged oppositely to each other in the thickness direction thereof, and the first convex part 1122 protrudes from the outer surface in a direction away from the inner part of the battery cells 1, wherein the electrode terminal 12 is arranged on the body 1121, and the insulation layer 13 covers and is fixed on the first convex part 1122;
S2, providing a box 101, wherein the box 101 is provided with an accommodating cavity 1011 with an opening 1012;
S3, accommodating the multiple battery cells 1 in the accommodating cavity 1011; and
S4, bonding the insulation layer 13 with a cover piece 400 covering the opening 1012 to fixedly connect the multiple battery cells 1 to the cover piece 400.

It should be noted that the relevant structure of the battery 100 manufactured through the preparation method for the battery 100 mentioned above can be found in the battery 100 provided in the above embodiments.

When assembling the battery 100 based on the preparation method for the battery 100 mentioned above, it is not necessary to follow the steps mentioned above in sequence. That is to say, the steps can be executed in the order mentioned in the embodiment, the steps can be executed different from the order mentioned in the embodiment, or several steps can be executed simultaneously. For example, steps S1 and S2 can be executed simultaneously, regardless of their order.

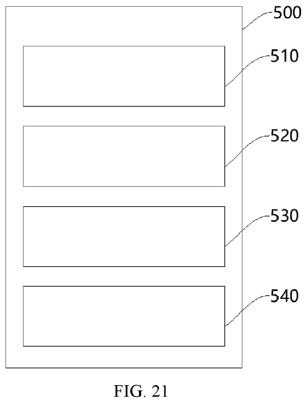

According to some embodiments of the present application, as shown in FIG. 21, the embodiment of the present application provides a preparation device 500 for a battery 100, wherein the preparation device 500 includes a first providing device 510, a second providing device 520, a first assembling device 530, and a second assembling device 540, wherein the first providing device 510 is configured to provide multiple battery cells 1, wherein each battery cell 1 includes a shell 11, an electrode terminal 12, and an insulation layer 13, wherein the shell 11 includes a first wall, wherein the first wall includes a body 1121 and a first convex part 1122, wherein the body 1121 has an inner surface and an outer surface arranged oppositely to each other in the thickness direction thereof, and the first convex part 1122 protrudes from the outer surface in a direction away from the inner part of the battery cells 1, wherein the electrode terminal 12 is arranged on the body 1121, and the insulation layer 13 covers and is fixed on the first convex part 1122; the second providing device 520 is configured to provide a box 101, wherein the box 101 is provided with an accommodating cavity 1011 with an opening 1012; the first assembling device 530 is configured to accommodate the multiple battery cells 1 in the accommodating cavity 1011; and the second assembling device 540 is configured to bond the insulation layer 13 with the cover piece 400 covering the opening 1012 to fixedly connect the multiple battery cells 1 to the cover piece 400.

The relevant structure of the battery 100 manufactured through the above preparation device 500 can be found in the battery 100 provided in the above embodiments.

It should be noted that in the absence of conflicts, the embodiments and the features in the embodiments in the present application can be combined with each other.

According to an embodiment of the present application, referring to FIGS. 2 to 8, the present application provides a power battery 100 for a vehicle 1000. The battery 100 includes a plurality of battery cells 1 and a box 101. The box 101 is of a hollow cuboid, the hollow cuboid forms a accommodating cavity 1011, one surface of the cuboid forms an opening 1012 communicating with the accommodating cavity 1011, and the multiple battery cells 1 are accommodated in the accommodating cavity 1011. Each battery cell 1 is square, and the multiple battery cells 1 are arranged along the first direction X to form a battery cell group 102, and the multiple battery cell groups 102 are arranged along the second direction Y. Each battery cell 1 includes a shell 11, electrode terminals 12, and insulation layer 13. The shell 11 includes a first wall, which is facing away from the bottom wall of the box 101. That is to say, the first wall faces or is exposed to the opening 1012 of the box 101. The shell 11 includes a casing 111 and an end cover 112, with the first wall optional as the end cover 112. The first wall includes a body 1121 and a first convex part 1122, wherein the body 1121 has an inner surface and an outer surface arranged oppositely to each other in the thickness direction thereof, and the first convex part 1122 protrudes from the outer surface in a direction away from the inner part of the battery cells 1. The electrode terminal 12 is arranged on the body 1121, and the insulation layer 13 covers and is fixed on the first convex part 1122, wherein the insulation layer 13 is configured for bonding with the cover piece 400 covering the opening 1012 to fixedly connect the multiple battery cells 1 to the cover piece 400. The cover piece 400 is optionally the floor of the vehicle 1000. The battery 100 provided in the present application has high energy density and good integrality, which is not prone to electric leakage and short circuit, and has good safety.

The above is only preferred embodiments of the present application and is not intended to limit it. For those skilled in the art, the present application may undergo various modifications and variations. Any modifications, equivalent replacements, improvements, etc. made within the spirit and principles of the present application shall be included within the scope of protection of the present application.

## Claims

1. A battery, comprising:
multiple battery cells, wherein each battery cell comprises a shell, an electrode terminal, and an insulation layer, wherein the shell comprises a first wall, wherein the first wall comprises a body and a first convex part, wherein the body has an inner surface and an outer surface arranged oppositely to each other in a thickness direction thereof, and the first convex part protrudes from the outer surface in a direction away from an inner part of the battery cells, wherein the electrode terminal is arranged on the body, and the insulation layer covers and is fixed on the first convex part; and
a box, wherein the box is provided with an accommodating cavity with an opening, and the multiple battery cells are accommodated in the accommodating cavity, wherein
the insulation layer is configured for bonding with a cover piece covering the opening to fixedly connect the multiple battery cells to the cover piece.

2. The battery according to claim 1, wherein in a thickness direction of the body, a height of the insulation layer protruding from the outer surface is greater than a height of the electrode terminal protruding from the outer surface.

3. The battery according to claim 1 or 2, wherein after the box is mounted on a vehicle, the cover piece is located above the box.

4. The battery according to claim 3, wherein the cover piece is a floor of the vehicle.

5. The battery according to any one of claims 1 to 4, wherein the first convex part is made of the same material as the body.

6. The battery according to any one of claims 1 to 5, wherein the first convex part and the body are integrally molded.

7. The battery according to any one of claims 1 to 6, wherein a concave part is formed at a position on the body corresponding to the first convex part, and the concave part is concave from the inner surface towards a direction away from an inside of the battery cells.

8. The battery according to claim 7, wherein each battery cell further comprises an insulating member and an electrode assembly, wherein the electrode assembly is arranged within the shell, the insulating member is arranged between the first wall and the electrode assembly, and one side of the insulating member facing the first wall is provided with a second convex part, wherein the second convex part is accommodated within the concave part to support the first convex part.

9. The battery according to any one of claims 1 to 5, wherein the first convex part is separated from the body, and the first convex part is welded to the body.

10. The battery according to claim 9, wherein the first convex part comprises a top wall and a side wall, wherein the top wall is arranged oppositely to the body, the side wall surrounds the top wall, one end of the side wall is connected to the top wall, the other end of the side wall extends towards the body, the top wall, the side wall, and the body jointly define a cavity, and the insulation layer covers the top wall.

11. The battery according to claim 10, wherein the top wall is provided with a through hole, and the insulation layer comprises a first part, a second part, and a third part, wherein the first part is located on a side of the top wall that is away from the body, the second part is located on a side of the top wall facing the body, and the third part is located inside the through hole and connected to the first part and the second part.

12. The battery according to claim 10 or 11, wherein the first convex part further comprises a flange, wherein the flange extends from the other end of the side wall towards a direction away from the cavity, and the flange is welded to the body.

13. The battery according to claim 12, wherein the outer surface of the body is provided with a groove, the first convex part is arranged in the groove, and an outer peripheral surface of the flange is welded with an inner peripheral surface of the groove.

14. The battery according to any one of claims 1 to 13, wherein the battery further comprises:
a busbar component, configured to be electrically connected to the electrode terminal, wherein
the insulation layer comprises a main body part and an extension part, wherein the main body part covers and is fixed to the first convex part, the extension part extends from the main body part to the electrode terminal, and a gap is formed between the extension part and the electrode terminal in a thickness direction of the body to accommodate the busbar component.

15. The battery according to claim 14, wherein a thickness of the extension part is less than a thickness of the main body part.

16. The battery according to any one of claims 1 to 15, wherein each battery cell further comprises a pressure relief mechanism, and the shell further comprises a second wall arranged oppositely to the first wall, wherein the pressure relief mechanism is arranged on the second wall, and the pressure relief mechanism is configured to activate to release an internal pressure of any battery cell when the internal pressure or temperature of the battery cell reaches a threshold.

17. The battery according to any one of claims 1 to 16, wherein the multiple battery cells form multiple battery cell groups, wherein each of the battery cell groups comprises multiple battery cells arranged in a first direction, the multiple battery cell groups are arranged in a second direction, and the second direction is perpendicular to the first direction, wherein the insulation layer of the multiple battery cells in each of the battery cell groups is integrally molded.

18. An electrical equipment, comprising the battery according to any one of claims 1 to 17.

19. A preparation method for a battery, comprising:
providing multiple battery cells, wherein each battery cell comprises a shell, an electrode terminal, and an insulation layer, wherein the shell comprises a first wall, wherein the first wall comprises a body and a first convex part, wherein the body has an inner surface and an outer surface arranged oppositely to each other in a thickness direction thereof, and the first convex part protrudes from the outer surface in a direction away from an inner part of the battery cells, wherein the electrode terminal is arranged on the body, and the insulation layer covers and is fixed on the first convex part;
providing a box, wherein the box is provided with an accommodating cavity with an opening; and
accommodating the multiple battery cells in the accommodating cavity, and bonding the insulation layer with a cover piece covering the opening to fixedly connect the multiple battery cells to the cover piece.

20. A preparation device for a battery , comprising:
a first providing device, configured to provide multiple battery cells, wherein each battery cell comprises a shell, an electrode terminal, and an insulation layer, wherein the shell comprises a first wall, wherein the first wall comprises a body and a first convex part, wherein the body has an inner surface and an outer surface arranged oppositely to each other in a thickness direction thereof, and the first convex part protrudes from the outer surface in a direction away from an inner part of the battery cells, wherein the electrode terminal is arranged on the body, and the insulation layer covers and is fixed on the first convex part;
a second providing device, configured to provide a box, wherein the box is provided with an accommodating cavity with an opening;
a first assembling device, configured to accommodate the multiple battery cells in the accommodating cavity; and
a second assembling device, configured to bond the insulation layer with a cover piece covering the opening to fixedly connect the multiple battery cells to the cover piece.
